(19) Europäisches Patentamt
European Patent Office
Office européen des brevets

(11) **EP 2 197 085 A1**

(12) **EUROPEAN PATENT APPLICATION**
published in accordance with Art. 153(4) EPC

(43) Date of publication:
**16.06.2010 Bulletin 2010/24**

(51) Int Cl.:
*H02J 7/04* (2006.01)          *H01M 10/44* (2006.01)

(21) Application number: **08835926.0**

(22) Date of filing: **03.10.2008**

(86) International application number:
**PCT/JP2008/002787**

(87) International publication number:
**WO 2009/044558 (09.04.2009 Gazette 2009/15)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.10.2007 JP 2007261829**

(71) Applicant: **Panasonic Corporation**
**Kadoma-shi**
**Osaka 571-8501 (JP)**

(72) Inventors:
• **MORIMOTO, Naohisa**
**Chuo-ku, Osaka-shi**
**Osaka 540-6207 (JP)**

• **SHIMADA, Mikinari**
**Chuo-ku, Osaka-shi**
**Osaka 540-6207 (JP)**
• **INOUE, Toshihiro**
**Chuo-ku, Osaka-shi**
**Osaka 540-6207 (JP)**
• **NAMOTO, Shinichi**
**Chuo-ku, Osaka-shi**
**Osaka 540-6207 (JP)**

(74) Representative: **Schwabe - Sandmair - Marx**
**Patentanwälte**
**Stuntzstraße 16**
**81677 München (DE)**

(54) **NON-AQUEOUS ELECTROLYTE SECONDARY CELL PULSE CHARGE METHOD AND PULSE CHARGE CONTROL DEVICE**

(57) A pulse charge method for a nonaqueous electrolyte secondary battery, includes: a charge control step of pulse charging by supplying a pulsed current periodically to the nonaqueous electrolyte secondary battery; a battery voltage detection step of measuring a battery voltage of the nonaqueous electrolyte secondary battery; a comparison step of comparing the battery voltage, measured in the battery voltage detection step when the pulsed current is supplied, with a predetermined set voltage; and a charge end control step of ending the pulse charging when a comparison result shows that the measured battery voltage is equal to or higher than the set voltage.

FIG. 3

## Description

Technical Field

The present invention relates to a pulse charge method and a pulse charge control device for a nonaqueous electrolyte secondary battery, and more particularly to a pulse charge method and a pulse charge control device that can reduce the deterioration of a nonaqueous electrolyte secondary battery in pulse charging.

Background Art

Following the reduction in size and weight of electronic devices such as cellular phones and notebook personal computers, a demand has been created for increased capacity of secondary batteries that serve as power sources for such portable electronic devices. Nonaqueous electrolyte secondary batteries have been widely used in portable electronic devices because such batteries have an energy density higher than that of other secondary batteries. Where charge control of nonaqueous electrolyte secondary batteries is not conducted accurately, heat is generated and charge efficiency drops. Therefore, pulse charging has been widely used as a charge method that enables charging within a comparatively short time. A method by which constant-current charging is conducted when the battery voltage at the charge start time is low and a transition to pulse charging is made when the battery voltage rises to a predetermined voltage (see Patent Document 1) and a method by which pulse charging is conducted from the charge start time and the on-duty time of the pulse charge is shortened or the rest time is extended as the battery voltage rises (see Patent Document 2) have been disclosed as pulse charge methods.

However, in the conventional pulse charge method, the charge end condition is determined by a battery voltage in the pulse charge OFF period, that is, by an Open Circuit voltage (OCV).

Where pulse charging is conducted with respect to a nonaqueous electrolyte secondary battery in which the internal resistance has increased due to cycle deterioration or the like, the voltage generated by a charge current flowing in the internal resistance is added to the electromotive force of the cell and the received voltage rises. As a result, the battery voltage in the charge pulse ON period also rises.

Thus, the charge voltage in the charge pulse ON period (during on-duty) is found to exceed the elution voltage of metals contained in the positive electrode mix. For example, in a case in which the nonaqueous electrode secondary battery is a lithium ion secondary battery, a lithium cobalt complex oxide or a lithium manganese complex oxide is used as a positive electrode active material in the positive electrode mix. Where the charge voltage rises, the elution of metal elements contained in these oxides into the electrolyte becomes significant. As a result, the eluted metals precipitate on the negative electrode and form dendrites or the like that lead to an internal short circuit, clog the porous membrane separator, and increase internal resistance, thereby producing adverse effect on battery characteristics.

Patent Document 1: Japanese Patent Application Laid-Open No. H4-123771.
Patent Document 2: Japanese Patent Application Laid-Open No. H8-241735.

Disclosure of the Invention

The present invention has been created to resolve the above-described problems and it is an object thereof to provide a pulse charge method and a pulse charge control device that can inhibit the elution of a metal contained in the positive electrode mix and the deterioration of battery characteristics induced thereby.

A pulse charge method for a nonaqueous electrolyte secondary battery according to one aspect of the present invention includes: a charge control step of pulse charging by supplying a pulsed current periodically to the nonaqueous electrolyte secondary battery; a battery voltage detection step of measuring a battery voltage of the nonaqueous electrolyte secondary battery; a comparison step of comparing a battery voltage, measured in the battery voltage detection step when the pulsed current is supplied, with a predetermined set voltage, and a charge end control step of ending the pulse charging when the comparison result shows that the measured battery voltage is equal to or higher than the set voltage.

A pulse charge control device according to another aspect of the present invention includes: a charge control unit that pulse charges by supplying a pulsed current periodically to a nonaqueous electrolyte secondary battery; a battery voltage detection unit that measures a battery voltage of the nonaqueous electrolyte secondary battery; a voltage comparison unit that compares a battery voltage, measured by the battery voltage detection unit when the pulsed current is supplied, with a predetermined set voltage; and a charge end control unit that ends the pulse charging when a result of comparison conducted by the voltage comparison unit shows that the measured battery voltage is equal to or higher than the set voltage.

With the above-described configuration, when the battery voltage at the time a current is supplied in pulse charging to the nonaqueous electrolyte secondary battery is equal to or higher than the set voltage, the pulse charging ends and further increase in the battery voltage is prevented. Therefore, the battery voltage is suppressed to a value equal to or lower than the set voltage even in a state in which a charge current flows in the internal resistance of the nonaqueous electrolyte secondary battery and the battery voltage rises. Therefore, by setting the set voltage to a value equal to or lower than an elution voltage at which a metal contained in the positive electrode mix elutes, it is possible to inhibit easily the elution of metals contained in the positive electrode mix and deterioration of battery characteristics.

Brief Description of the Drawings

[Fig. 1] Fig. 1 is a schematic structural diagram of a pulse charge control device of the first embodiment of the present invention.
[Fig. 2] Fig. 2 is a detailed block diagram of the pulse charge control device of the first embodiment of the present invention.
[Fig. 3] Fig. 3 is a flowchart for explaining the charge operation of the pulse charge control device of the first embodiment of the present invention.
[Fig. 4] Fig. 4 is a detailed block diagram of the pulse charge control device of the second embodiment of the present invention.
[Fig. 5] Fig. 5 is a flowchart for explaining the charge operation of the pulse charge control device of the second embodiment of the present invention.

Best Mode for Carrying Out the Invention

The present invention relates to a pulse charge control method for a nonaqueous electrolyte secondary battery for use in a portable electronic device, including the steps of measuring a battery voltage during pulse ON in pulse charging, comparing the measured battery voltage and a predetermined set voltage, and ending the pulse charging when the measured battery voltage is equal to or higher than the predetermined set voltage. The resultant effect is that pulse charge time can be shortened and battery deterioration can be prevented at the same time.

The predetermined set voltage may be set on the basis of battery temperature. Thus, because the voltage at which the battery deteriorates depends on temperature, by providing a predetermined set voltage based on battery temperature, it is possible to charge the battery effectively to a maximum capacity, without causing deterioration.

The predetermined set voltage may be set to a voltage of equal to or higher than 4.2 V. As a result, the efficiency of charging can be increased, while inhibiting the elution of metals in the nonaqueous electrolyte secondary battery.

Embodiments of the present invention will be described below with reference to the appended drawings.

First Embodiment

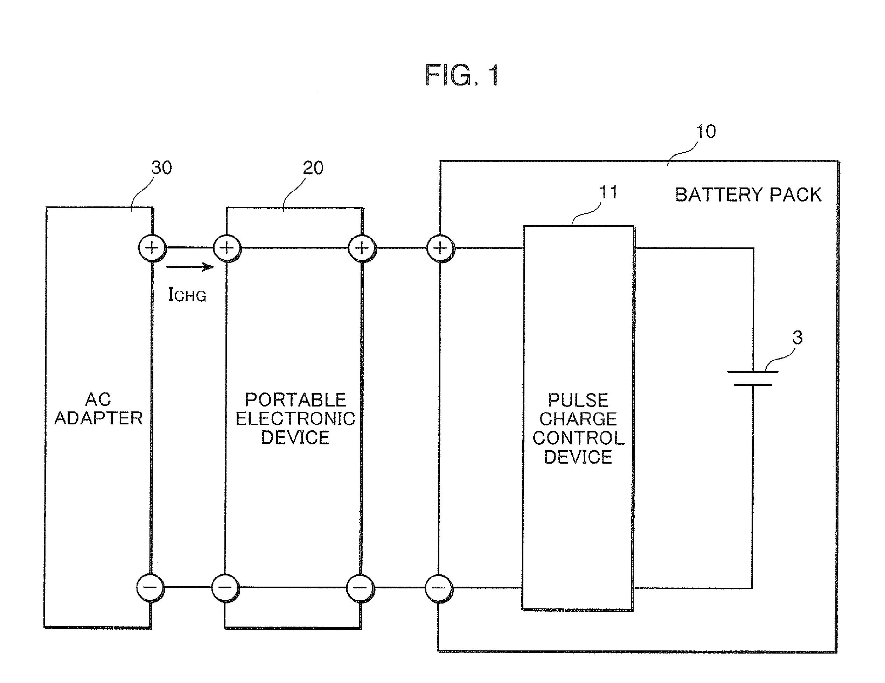

Fig. 1 is a block diagram illustrating an example of schematic configuration of a battery pack 10 that includes a pulse charge control device using the pulse charge method in accordance with the present invention. Referring to Fig. 1, the charging is implemented in a pulse charge control device 11 located inside the battery pack 10. An AC adapter 30 shown in Fig. 1 has a stable characteristic as a power source for charging and has a capacity of supplying a charge current $I_{CHG}$ as a constant current.

A nonaqueous electrolyte secondary battery 3 is connected to the pulse charge control device 11. Various nonaqueous electrolyte secondary batteries, for example, a lithium ion secondary battery can be used as the nonaqueous electrolyte secondary battery 3.

The AC adapter 30 is connected to a portable electronic device 20, and the portable electronic device 20 is connected to the battery pack 10. The portable electronic device 20 can be any from a variety of electronic devices driven by a battery, such as a portable personal computer, a digital camera, and a cellular phone.

A constant charge current $I_{CHG}$ is generated, for example, in a constant current circuit located in the portable electronic device 20 from the voltage outputted from the AC adapter 30, supplied via the portable electronic device 20 to the pulse charge control device 11 located in the battery pack 10, converted by the pulse charge control device 11 into pulses, and supplied to the nonaqueous electrolyte secondary battery 3, whereby the nonaqueous electrolyte secondary battery 3 is pulse charged.

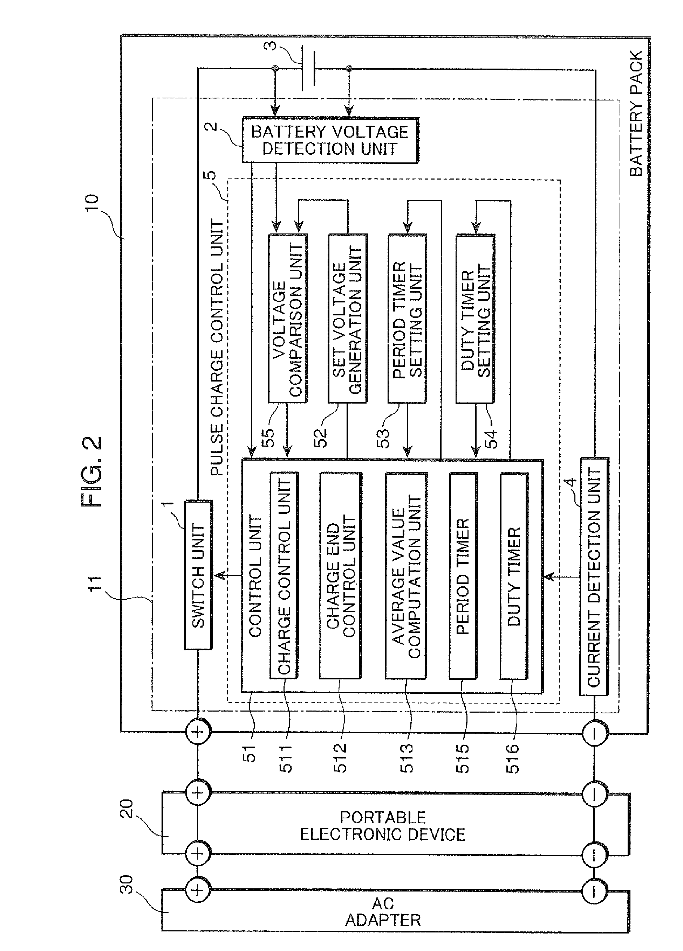

Fig. 2 is a detailed block diagram of the pulse charge control device of the first embodiment of the present invention. As shown in Fig. 2, the pulse charge control device 11 shown in Fig. 1 is constituted by a switch unit 1 that ON/OFF switches the constant current, a battery voltage detection unit 2 that detects a battery voltage, a current detection unit 4 that determines that the AC adapter 30 has been connected by the charge current, and a pulse charge control unit 5 that conducts the entire control of pulse charge. The pulse charge control unit 5 is constituted by a control unit 51 that controls the below-described components, a set voltage generation unit 52 (set voltage setting unit) that generates a predetermined set voltage as a reference voltage on the basis of control conducted by the control unit 51, a period timer setting unit 53 that stipulates a charge period, a duty timer setting unit 54 (duty ratio setting unit) that sets a duty time determined by a product of the stipulated charge period and duty ratio, and a voltage comparison unit 55 that compares a predetermined set voltage V1 of the set voltage generation unit 52 and a battery voltage obtained from the battery voltage detection unit 2. All these components are realized by a microcomputer.

More specifically, the switch unit 1 may be constituted, for example, by a charge switch that ON/OFF(close/open) switches the current in the charge direction of the nonaqueous electrolyte secondary battery 3 and a discharge switch that ON/OFF(close/open) switches the current in the discharge direction of the nonaqueous electrolyte secondary battery 3. A semiconductor switching element, for example, a FET (Field Effect Transistor) can be used as the switch unit 1 (charge switch and discharge switch).

The voltage comparison unit 55 is constituted, for example, by using a comparator. The set voltage generation unit 52 is constituted, for example, by using a constant voltage circuit that outputs the set voltage V1 or a digital-analog converter. Further, the set voltage generation unit 52 outputs, for example, 4.2 V which is a full-charge voltage of the nonaqueous electrolyte secondary battery 3 as the set voltage to the voltage comparison unit 55. For example, by executing the predetermined control programs, the microcomputer functions as the period timer setting unit 53 and duty timer setting unit 54.

For example, where the microcomputer executes the predetermined control programs, the control unit 51 can function as a charge control unit 511, a charge end control unit 512, and an average value calculation unit 513. The control unit 51 is also provided with a period timer 515 that is a timer circuit that counts the charge pulse periods and a duty timer 516 that is a timer circuit that counts the ON time of charge pulses.

The charge control unit 511 conducts pulse charging by supplying pulse current periodically to the nonaqueous electrolyte secondary battery 3 by ON/OFF switching the switch unit 1 correspondingly to the counted time of the period timer 515 and duty timer 516.

On the basis of comparison result obtained by the voltage comparison unit 55, the charge end control unit 512 ends the pulse charge, for example, by switching OFF the switch unit 1 when the battery voltage measured by the battery voltage detection unit 2 is equal to or higher than the set voltage V1 outputted from the set voltage generation unit 52.

Further, the average value calculation unit 513 calculates an average value $V_{AVE}$ of the battery voltage measured by the battery voltage detection unit 2 with respect to one period interval counted by the period timer 515.

Each time the average value $V_{AVE}$ calculated by the average value calculation unit 513 exceeds the predetermined charge control voltage $V_c$ in each period of charge pulse, the duty timer setting unit 54 decreases the on-duty ratio of pulses in pulse charge by a preset value, for example, by 1%, and sets a product of the duty ratio and the charge period as a duty time in the duty timer 516.

When the average value $V_{AVE}$ calculated by the average value calculation unit 513 is less than the predetermined charge control voltage $V_c$ in each period of charge pulse, the duty timer setting unit 54 increases the on-duty ratio of pulses in pulse charge by a preset value, for example, by 1%, and sets a product of the duty ratio and the charge period as a duty time in the duty timer 516.

The charge control voltage $V_c$ is obtained, for example, by the following Equation (1):

$$V_c = Voc + r \times \alpha \qquad \ldots(1)$$

where Voc stands for an open-circuit voltage when the nonaqueous electrolyte secondary battery 3 is fully charged, r stands for an internal resistance value in a normal state of the nonaqueous electrolyte secondary battery 3, and $\alpha$ stands for an average value of a charge current in one period of a charge pulse when pulse charging is ended.

The normal state as referred to herein indicates a state suitable for using the nonaqueous electrolyte secondary battery 3. For example, an upper limit value of a range of the internal resistance value in which the nonaqueous electrolyte secondary battery 3 is suitable for use is set as the internal resistance value r. Further, a current value of about 0.1 It, wherein 1 It stands for a current value at which the nonaqueous electrolyte secondary battery 3 in a fully charged state can be discharged to a zero capacity within one hour can be used as the current value $\alpha$.

For example, where the minimum value of a duty ratio at a time pulse charging is performed (a duty ratio such that pulse charging has to be stopped if the duty ratio of a charge pulse is decreased below it) is denoted by d (%), the current value $\alpha$ is $(d/100) \times I_{CHG}$.

The relationship with the average value $V_{AVE}$ will be explained below. Where the charge voltage VB at a time the charge pulse is ON in a fully charged state is taken as a voltage Vf, the average value $V_{AVE}$ in a fully charged state can be obtained by the following equation.

$$V_{AVE} = (d/100) \times Vf + (1 - d/100) + Voc$$

$$= (d/100) \times (Voc + r \times I_{CHG}) + (1 - d/100) + Voc$$

$$= Voc + (d/100) \times r \times I_{CHG} \qquad \ldots(2)$$

Here, it follows from Equation (1) that

$$V_c = Voc + r \times \alpha$$

$$= Voc + r \times (d/100) \times I_{CHG}. \text{ Therefore, } V_c = V_{AVE}.$$

Thus, the charge control voltage $V_c$ indicates the average value $V_{AVE}$ at a time the nonaqueous electrolyte secondary battery 3 is fully charged.

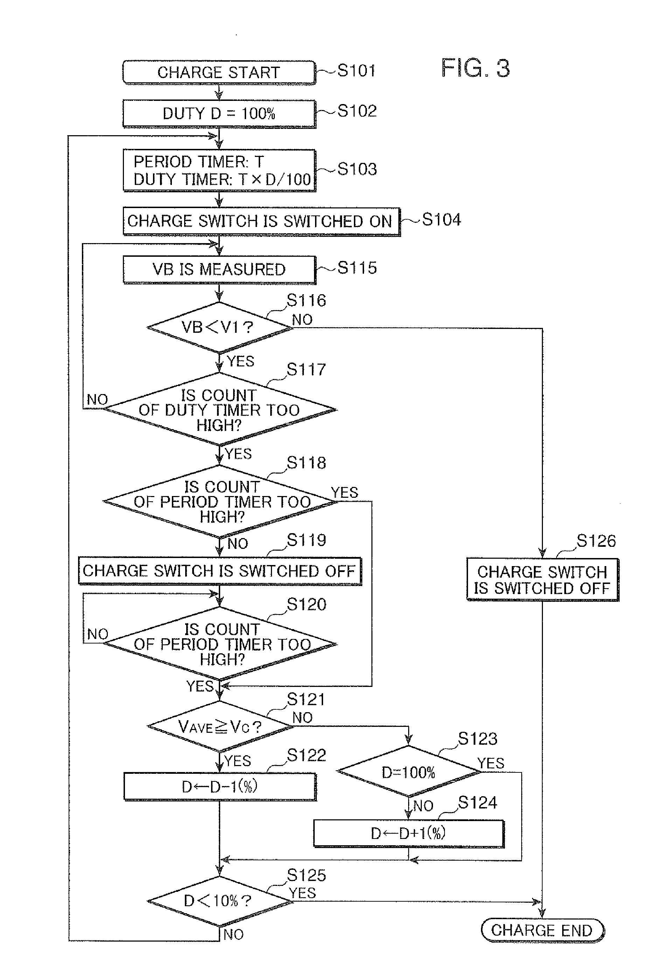

Fig. 3 is a flowchart illustrating the charge operation of the pulse charge control device 11 according to the first embodiment of the present invention. Where charging is indicated to be started in step S101, the on-duty ratio D of a pulse is set to 100% at a start time by the duty timer setting unit 54 in step S102. Then, in step S103, the period T is set as a timer value of the period timer 515 by the period timer setting unit 53, and $T \times D/100$ is set as a timer value of the duty timer 516 by the duty timer setting unit 54. An appropriate value within a range of from 50 msec to 2 sec can be selected as the period T. Therefore, for example where the period T is 50 sec, the on-duty ratio D of the pulse is 100%. Therefore, the duty timer is set to 50 msec $\times$ 100/100 = 50 msec.

As described hereinabove, where the timer value is set, the time count with the period timer 515 and duty timer 516 is started.

In step S104, the charge switch in the switch unit 1 is set ON by the control unit 51 (charge control unit 511). In step S115, a voltage VB of the nonaqueous electrolyte secondary battery 3 that is being charged is measured by the battery voltage detection unit 2. In step S116, the voltage comparison unit 55 determines whether the charge voltage (terminal voltage) VB of the nonaqueous electrolyte secondary battery 3 is equal to or less than the predetermined set voltage V1. This determination is realized by comparing the charge voltage VB of the nonaqueous electrolyte secondary battery 3 that has been detected by the battery voltage detection unit 2 with the predetermined set voltage V1 that has been set by the set voltage generation unit 52 with the voltage comparison unit 55. Where the charge voltage VB is equal to or higher than the set voltage V1, the processing flow advances to step S126, the charge switch in the switch unit 1 is set OFF by the charge end control unit 512 and the charge is then stopped. Where the charge voltage VB is less than the set voltage V1, the processing flow advances to step S117.

In step S117, the control unit 51 (charge control unit 511) determines whether the count value of the duty timer 516 has exceeded $T \times D/100$. Where the duty timer 516 has not exceeded $T \times D/100$, the processing flow again returns to step S115. Where the duty timer 516 has exceeded $T \times D/100$, the processing flow advances to step S118. In step S118, the control unit 51 (charge control unit 511) determines whether the count value of the period timer 515 has exceeded the period T. Where the period timer 515 has not exceeded the period T, the processing flow advances to step S119. Where the set period timer 515 has exceeded the period T, the processing flow advances to step S121.

In step S119, the charge switch in the switch unit 1 is set OFF by the control unit 51 (charge control unit 511). The step S120 is repeated till the period timer 515 exceeds the period T in step S120, and where the period timer 515 exceeds the set period T, the processing flow advances to step S121.

With the processing of steps S103 to S120, the pulse charging is executed by a pulse current with a period T and an on-duty ratio D.

Meanwhile, with the control unit 51 (average value calculation unit 513), the average value $V_{AVE}$ of voltage of the nonaqueous electrolyte secondary battery 3 measured by the battery voltage detection unit 2 over the period T is calculated. In step S121, the average value $VA_{VE}$ and charge control voltage $V_c$ are comparatively determined by the duty timer setting unit 54. Where the determination result shows that $V_{AVE}$ is larger than $V_c$, the processing flow moves to step S122, the on-duty ratio D is decremented (reduced) by the duty timer setting unit 54, and the processing flow advances to step S125. Where the determination result shows that $V_{AVE}$ is less than $V_c$, the processing advances to step S123.

In step S123, the duty timer setting unit 54 determines whether the on-duty ratio D of the pulse is 100%. Where the on-duty ratio D is 100%, the processing flow advances to step S125. Where the on-duty ratio D is not 100%, the processing flow advances to S124. Here, the on-duty ratio D of the pulse is incremented (increased) by the duty timer setting unit 54, and the processing flow advances to step S125.

Where the on-duty ratio D is reduced, the average value $V_{AVE}$ decreases, and where the on-duty ratio D is increased, the average value $V_{AVE}$ rises. Therefore, with the processing of steps S121 to S124, the on-duty ratio D is adjusted so that the average value $V_{AVE}$ in one period of the charge pulse is brought close and made almost equal to the charge control voltage Vc.

The charge control voltage $V_c$ is represented by Equation (1) above. Because the term $r \times \alpha$ in Equation (1) corresponds to a voltage drop caused by the internal resistance of the nonaqueous electrolyte secondary battery 3 at the end of pulse charge, the charge control voltage $V_c$ obtained by adding this voltage drop to the open-circuit voltage Voc at a time of full charge corresponds to the terminal voltage of the nonaqueous electrolyte secondary battery 3 at the pulse charge end time and also corresponds to the upper limit voltage at which the nonaqueous electrolyte secondary battery 3 can be charged in an overvoltage-free range.

Therefore, by gradually decreasing the on-duty ratio D so that the average value $V_{AVE}$ in one period of charge pulse becomes equal to the charge control voltage $V_c$, it is possible to obtain an average value $V_{AVE}$ in one period that is equal to the charge control voltage $V_c$ that is the upper limit voltage at which the nonaqueous electrolyte secondary battery 3 can be charged in an overvoltage-free range. As a result, the nonaqueous electrolyte secondary battery 3 can be charged efficiently.

In step S125, the control unit 51 (charge end control unit 512) determines whether the on-duty ratio D of the pulse is less than a stipulated value d (in this case, 10%). Where the determination result demonstrates that the on-duty ratio D of the pulse is less than the stipulated value d, the charging is ended. However, where the determination result demonstrates that the on-duty ratio D of the pulse is not less than the stipulated value d, the processing flow returns to step S103.

The pulse charge control device 11 of the first embodiment of the present invention thus starts and ends charging of the nonaqueous electrolyte secondary battery 3. Immediately after the charging has been started, the on-duty ratio D of the pulse changes by 100% and essentially a constant-current charging is performed. The decrement of the on-duty ratio D is started from a period T immediately after the average value $V_{AVE}$ of the battery voltage of the nonaqueous electrolyte secondary battery 3 has been detected to be equal to to higher than the charge control voltage Vc. When the battery has not deteriorated and the voltage in the on-duty mode has not become equal to or higher than the predetermined voltage V1, the charging is completed at a point in time in which the on-duty ratio D becomes less than the stipulated value d (in this case 10%) due to the decrement of the on-duty ratio D. Meanwhile, where the battery has deteriorated and the voltage in the on-duty mode has become equal to or higher than the predetermined voltage V1, the charging is ended at this point in time.

Substantially pulse charging is performed till the decrement of the on-duty ratio D is started and the on-duty ratio D becomes less than the stipulated value d (in this case, 10%) due to the decrement of the on-duty ratio D. However, in the charge operation of the first embodiment of the present invention, it is important to confirm that pulse charging is realized continuously from the charge start. The decrement or increment of the on-duty ratio D in the above-described embodiment is taken as 1%, but it goes without saying that this value can be randomly varied.

With the processing of steps S121 to S125, the pulse charging can be ended even when the charge voltage VB of the nonaqueous electrolyte secondary battery 3 does not exceed the set voltage V1, that is, the full-charge voltage, in step S116. Therefore, the possibility of the overvoltage being applied to the nonaqueous electrolyte secondary battery 3 and the battery deterioration can be reduced.

The stipulated value d that determines the charge end is taken as 10% in the above-described embodiment, but this value can be set at random.

Further, Fig. 1 and Fig. 2 illustrate a case in which the pulse charge control device is contained in a battery pack, but it goes without saying that the pulse charge control device can be included not only in a battery pack, but also in a portable electronic device such as a cellular phone.

Second Embodiment

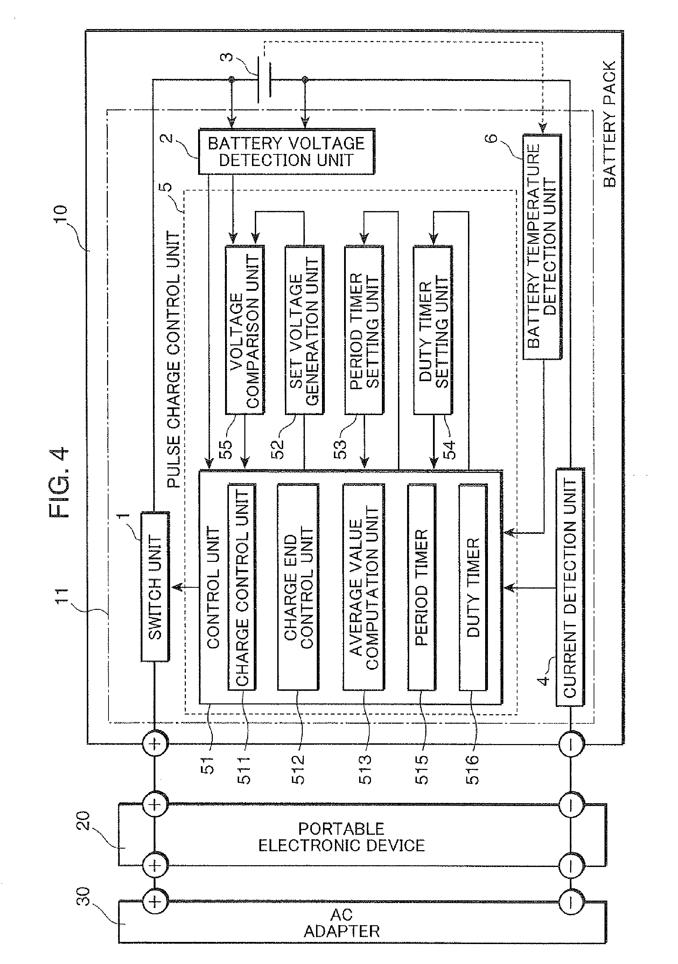

Fig. 4 is a detailed block diagram illustrating the second embodiment of the present invention. In the configuration shown in Fig. 4, the pulse charge control device 11 shown in Fig. 1 is constituted by a switch unit 1 that ON/OFF switches the charge current, a battery voltage detection unit 2 that detects a battery voltage, a current detection unit 4 that determines that the AC adapter 30 has been connected to the charge current, a battery temperature detection unit 6 that detects a battery temperature, and a pulse charge control unit 5 that conducts the entire control of pulse charge. The pulse charge control unit 5 is constituted by a control unit 51 that controls the below-described components, a set voltage generation unit 52 (set voltage setting unit) that generates a predetermined set voltage as a reference voltage on the basis of control conducted by the control unit 51, a period timer setting unit 53 that stipulates a charge period, a duty timer setting unit 54 (duty ratio setting unit) that sets a duty time determined by a product of the stipulated charge period and duty ratio, and a voltage comparison unit 55 that compares a predetermined set voltage V1 of the set voltage generation unit 52 and a battery voltage obtained from the battery voltage detection unit 2. All these components are realized by a microcomputer.

The pulse charge control device 11 shown in Fig. 4 differs from the pulse charge control device 11 shown in Fig. 2 in that the battery temperature detection unit 6 is further provided and in the operation of the set voltage generation unit 52. Other features are similar to those of the pulse charge control device 11 shown in Fig. 2 and the explanation thereof is herein omitted.

The battery temperature detection unit 6 detects the temperature of the nonaqueous electrolyte secondary battery 3 and outputs a signal indicating the temperature to the control unit 51. The control unit 51 outputs the information indicating the temperature of the nonaqueous electrolyte secondary battery 3 that has been obtained from the battery temperature detection unit 6 to the set voltage generation unit 52.

The set voltage generation unit 52 is constituted, for example, by a microcomputer and a digital-analog converter. Further, the set voltage generation unit 52 sets the set voltage so that the set voltage V1 decreases with the increase in the temperature detected by the battery temperature detection unit 6 and outputs the set voltage V1 to the voltage comparison unit 55.

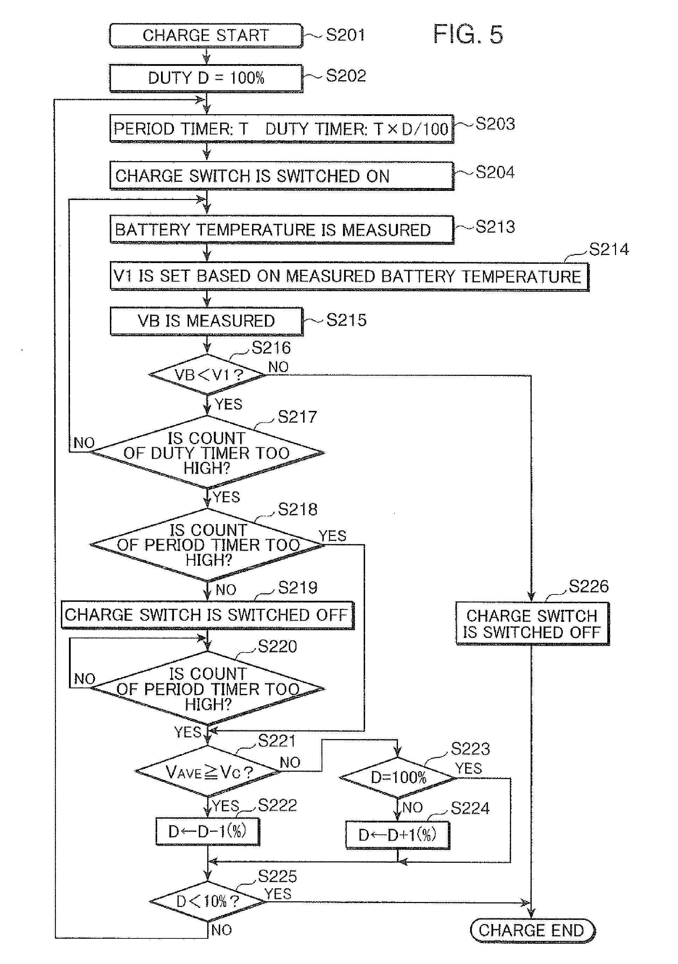

Fig. 5 is a flowchart illustrating the charge operation of the pulse charge control device 11 of the second embodiment of the present invention. Where charging is indicated to be started in step S201, the on-duty ratio D of a pulse is set to 100% at a start time by the duty timer setting unit 54 in step S202. Then, in step S203, the period T is set as a timer value of the period timer 515 by the period timer setting unit 53, and $T \times D/100$ is set as a timer value of the duty timer 516 by the duty timer setting unit 54. An appropriate value within a range of from 50 msec to 2 sec can be selected as the period T. Therefore, for example where the period T is 50 msec, the on-duty ratio D of the pulse is 100%. Therefore, the duty timer is set to 50 msec $\times$ 100/100 = 50 msec.

As described hereinabove, where the timer value is set, the time count with the period timer 515 and duty timer 516 is started.

In step S204, the charge switch in the switch unit 1 is set ON by the control unit 51 (charge control unit 511). In step S213, the battery temperature of the nonaqueous electrolyte secondary battery 3 is measured by the battery temperature detection unit 6 and the measured temperature is sent to the control unit 51. In step S214, the predetermined set voltage V1 is set by the set voltage generation unit 52 on the basis of the battery temperature measured by the battery temperature detection unit 6, and the set voltage V1 is outputted to the voltage comparison unit 55. In step S215, a voltage VB of the nonaqueous electrolyte secondary battery 3 that is being charged is measured by the battery voltage detection unit 2. In step S216, the voltage comparison unit 55 determines whether the charge voltage VB of the nonaqueous electrolyte secondary battery 3 is equal to or less than the predetermined set voltage V1. This determination is realized by comparing the charge voltage VB of the nonaqueous electrolyte secondary battery 3 that has been detected by the battery voltage detection unit 2 with the predetermined set voltage V1 that has been set by the set voltage generation unit 52 with the voltage comparison unit 55. Where the charge voltage VB is equal to or higher than the set voltage V1, the processing flow advances to step S226, the charge switch in the switch unit 1 is set OFF by the charge end control unit 512 and the charge is then stopped. Where the charge voltage VB is less than the set voltage V1, the processing flow advances to step S217.

In this case, the elution voltage at which the elution is started of metal elements from the positive electrode of the nonaqueous electrolyte secondary battery 3 into the electrolyte decreases with the increase in temperature of the nonaqueous electrolyte secondary battery 3. In order to prevent the elution of metals contained in the positive electrode mix, it is necessary that the set voltage V1 be set equal to or lower than the elution voltage.

However, in the pulse charge control device 11 shown in Fig. 2, when the set voltage V1 is set, for example, equal to or lower than the elution voltage at a low temperature, the elution voltage at a high temperature will be lower than the set voltage V1 and the elution of metals contained in the positive electrode mix can start before the charging is stopped in step S116 shown in Fig. 3.

In a case where the set voltage V1 is set, for example, equal to or less than the elution voltage at a high temperature, the charging at a low temperature in step S116 can end in a state with a margin before the elution of metals contained in the positive electrode mix is started. As a result, the capacity that essentially has to be obtained is not obtained.

However, in the pulse charge control device 11 shown in Fig. 4, in step S214 shown in Fig. 5, the set voltage generation unit 52 sets the set voltage V1 so that the set voltage V1 decreases with the increase in battery temperature measured by the battery temperature detection unit 6 and this set voltage V1 is outputted to the voltage comparison unit 55 and compared with the charge voltage VB. Therefore, the probability of an event in which the metals contained in the positive electrode mix of the nonaqueous electrolyte secondary battery 3 are eluted at a high temperature can be reduced, while reducing the probability of an event in which the capacity that essentially has to be obtained is not obtained at a low temperature.

In step S217, the control unit 51 (charge control unit 511) determines whether the count value of the duty timer 516 has exceeded $T \times D/100$. Where the duty timer 516 has not exceeded $T \times D/100$, the processing flow again returns to step 213. Where the duty timer 516 has exceeded $T \times D/100$, the processing flow advances to step S218. In step S218, the control unit 51 (charge control unit 511) determines whether the count value of the period timer 515 has exceeded the period T. Where the period timer 515 has not exceeded the period T, the processing flow advances to step S219. Where the set period timer 515 has exceeded the period T, the processing flow advances to step S221.

In step S219, the charge switch in the switch unit 1 is set OFF by the control unit 51 (charge control unit 511). The step S220 is repeated till the period timer 515 exceeds the period T in step S220, and where the period timer 515 exceeds the set period T, the processing flow advances to step S221.

With the processing of steps S203 to S220, the pulse charging is executed by a pulse current with a period T and an on-duty ratio D.

Meanwhile, with the control unit 51 (average value calculation unit 513), the average value $V_{AVE}$ of voltage of the nonaqueous electrolyte secondary battery 3 measured by the battery voltage detection unit 2 over the period T is calculated. In step S221, the average value $V_{AVE}$ and charge control voltage $V_c$ are comparatively determined by the duty timer setting unit 54. Where the determination result shows that $V_{AVE}$ is larger than $V_c$, the processing flow moves to step S222, the on-duty ratio D is decremented (reduced) by the duty timer setting unit 54, and the processing flow advances to step S225. Where the determination result shows that $V_{AVE}$ is less than $V_c$, the processing advances to step S223.

In step S223, the duty timer setting unit 54 determines whether the on-duty ratio D of the pulse is 100%. Where the on-duty ratio D is 100%, the processing flow advances to step S225. Where the on-duty ratio D is not 100%, the processing flow advances to S224. Here, the on-duty ratio D of the pulse is incremented (increased) by the duty timer setting unit 54, and the processing flow advances to step S225.

In step S225, the control unit 51 (charge end control unit 512) determines whether the on-duty ratio D of the pulse is less than a stipulated value d (in this case, 10%). Where the determination result demonstrates that the on-duty ratio D of the pulse is less than the stipulated value d, the charging is ended. However, where the determination result demonstrates that the on-duty ratio D of the pulse is not less than the stipulated value d, the processing flow returns to step S203.

Thus, charging of the nonaqueous electrolyte secondary battery 3 is started and ended in the above-described manner by the pulse charge control device 11 of the second embodiment of the present invention.

A pulse charge method for a nonaqueous electrolyte secondary battery according to one aspect of the present invention includes: a charge control step of pulse charging by supplying a pulsed current periodically to the nonaqueous electrolyte secondary battery; a battery voltage detection step of measuring a battery voltage of the nonaqueous electrolyte secondary battery; a comparison step of comparing a battery voltage, measured in the battery voltage detection step when the pulsed current is supplied, with a predetermined set voltage, and a charge end control step of ending the pulse charging when the comparison result shows that the measured battery voltage is equal to or higher than the set voltage.

A pulse charge control device according to another aspect of the present invention includes: a charge control unit that pulse charges by supplying a pulsed current periodically to a nonaqueous electrolyte secondary battery; a battery voltage detection unit that measures a battery voltage of the nonaqueous electrolyte secondary battery; a voltage comparison unit that compares a battery voltage, measured by the battery voltage detection unit when the pulsed current is supplied, with a predetermined set voltage, and a charge end control unit that ends the pulse charging when a result of comparison conducted by the voltage comparison unit shows that the measured battery voltage is equal to or higher than the set voltage.

With the above-described configuration, when the battery voltage at the time a current is supplied in pulse charging to the nonaqueous electrolyte secondary battery is equal to or higher than the set voltage, the pulse charging ends and further increase in the battery voltage is prevented. Therefore, the battery voltage is suppressed to a value equal to or lower than the set voltage even in a state in which a charge current flows in the internal resistance of the nonaqueous electrolyte secondary battery and the battery voltage rises. Therefore, by setting the set voltage to a value equal to or lower than an elution voltage at which metals contained in the positive electrode mix elute, it is possible to inhibit easily the elution of a metal contained in the positive electrode mix and deterioration of battery characteristics.

Further, it is preferred that the above-described pulse charge method for a nonaqueous electrolyte secondary battery further include a battery temperature detection step of detecting a temperature of the nonaqueous electrolyte secondary battery, and a set voltage setting step of setting the set voltage on the basis of the temperature detected in the battery temperature detection step.

Further, it is preferred that the above-described pulse charge control device further include: a battery temperature detection unit that detects a temperature of the nonaqueous electrolyte secondary battery; and a set voltage setting unit that sets the set voltage on the basis of the temperature detected by the battery temperature detection unit.

The elution temperature of a nonaqueous electrolyte secondary battery varies with temperature. Accordingly, by setting, based on the temperature of the nonaqueous electrolyte secondary battery, the set voltage to a voltage that is equal to or lower than the elution voltage corresponding to the temperature, the elution of metals contained in the positive electrolyte mix and the deterioration of battery characteristics caused thereby can be easily inhibited, regardless of the nonaqueous electrolyte secondary battery temperature.

Further, it is preferred that in the set voltage setting step of the above-described pulse charge method for a nonaqueous electrolyte secondary battery, the set voltage be set such that the set voltage decreases as the temperature detected in the battery temperature detection step increases.

Further, it is preferred that the set voltage setting unit of the above-described pulse charge control device set the set voltage such that the set voltage decreases as the temperature detected by the battery temperature detection unit increases.

The elution voltage of a nonaqueous electrolyte secondary battery decreases as the temperature increases. Accordingly, with the above-described configuration, because the set voltage is set such that the set voltage decreases as the temperature of the nonaqueous electrolyte secondary battery increases, it is possible to set a set voltage that can inhibit the elution of metals contained in the positive electrode mix correspondingly to the temperature of the nonaqueous electrolyte secondary battery. Further, in a case in which the set voltage corresponding to the elution voltage at a time of high temperature has been set in advance, the set voltage can be set too low and charge can be insufficient. However, with the above-described configuration, because the set voltage can be set at a time of low temperature, the possibility of insufficient charge is reduced.

Further, the set voltage may be equal to or higher than 4.2 V.

Because 4.2 V is a typical elution voltage of a nonaqueous electrolyte secondary battery, this voltage is advantageous as the set voltage.

Further, it is preferred that the above-described pulse charge method for a nonaqueous electrolyte secondary battery further include an average value calculation step of calculating an average value of the battery voltage with respect to one period in the periodically palsed current, and a duty ratio setting step of reducing an on-duty ratio of a pulse in the pulse charging only by a preset value each time the average value exceeds a predetermined charge control voltage, wherein in the charge end control step, the pulse charge is ended when the duty ratio that has been set in the duty ratio setting step becomes less than a stipulated value that has been set in advance.

Further, it is preferred that the above-described pulse charge control device further include an average value calculation unit that calculates an average value of the battery voltage measured by the battery voltage detection unit with respect to one period in the periodically palsed current, and a duty ratio setting unit that reduces an on-duty ratio of a pulse in the pulse charging only by a preset value each time the average value exceeds a predetermined charge control voltage, wherein the charge end control unit further ends the pulse charge performed by the charge control unit when the duty ratio that has been set by the duty ratio setting unit becomes less than a stipulated value that has been set in advance.

With such a configuration, because pulse charge can be ended without the battery voltage of the nonaqueous electrolyte secondary battery becoming equal to or higher than the set voltage, the possibility of the nonaqueous electrolyte secondary battery being deteriorated due to overvoltage application can be reduced.

Further, it is preferred that in the duty ratio setting step of the above-described pulse charge method for a nonaqueous electrolyte secondary battery, an on-duty ratio of a pulse in the pulse charging be increased only by a preset value when the average value is less than the charge control voltage.

Further, it is preferred that the duty ratio setting unit of the above-described pulse charge control device increase an on-duty ratio of a pulse in the pulse charging by a preset value when the average value is less than the charge control voltage.

With the above-described configuration, the on-duty ratio of a pulse in the pulse charging is reduced each time the average value of battery voltage for one period of a charge pulse exceeds the charge control voltage, and the on-duty ratio is increased when the average value is less than the charge control voltage. In this case, because the average value decreases if the on-duty ratio decreases, and the average value rises if the on-duty ratio increases, pulse charging is executed in a state in which the average value in one period of a charge pulse approaches the charge control voltage. Therefore, by appropriately setting the charge control voltage, it is possible to conduct easily the pulse charging under conditions suitable for charging the nonaqueous electrolyte secondary battery.

Further, it is preferred that the charge control voltage be obtained by the following Equation (1):

$$V_c = Voc + r \times \alpha \qquad \ldots(1)$$

where $V_c$ stands for the charge control voltage, Voc stands for an open-circuit voltage when the nonaqueous electrolyte secondary battery is fully charged, r stands for an internal resistance value in a normal state of the nonaqueous electrolyte secondary battery, and $\alpha$ stands for an average value of a charge current in one period of a charge pulse when pulse charging is ended.

In this case, the term $r \times \alpha$ in Equation (1) corresponds to a voltage drop caused by the internal resistance of the nonaqueous electrolyte secondary battery at the end of pulse charge. Therefore, the charge control voltage $V_c$ obtained by adding this voltage drop to the open-circuit voltage Voc at a time of full charge corresponds to the terminal voltage of the nonaqueous electrolyte secondary battery at the pulse charge end time and also corresponds to the upper limit voltage at which the nonaqueous electrolyte secondary battery can be charged in an overvoltage-free range. By gradually decreasing the on-duty ratio so that the average value in one period of charge pulse becomes equal to the charge control voltage $V_c$, it is possible to obtain an average value in one period that is equal to the charge control voltage $V_c$ that is the upper limit voltage at which the nonaqueous electrolyte secondary battery can be charged in an overvoltage-free range. As a result, the nonaqueous electrolyte secondary battery can be charged efficiently.

Industrial Applicability

The pulse charge method for a nonaqueous electrolyte secondary battery in accordance with the present invention and the pulse charge control device in accordance with the present invention can inhibit the elution of a metal contained in the positive electrode mix in pulse charging and the deterioration of battery characteristics induced thereby. Therefore, such a method and a device are useful, as they can increase the convenience of portable electronic devices such as cellular phones and notebook personal computers that use nonaqueous electrolyte secondary batteries as power source.

**Claims**

1. A pulse charge method for a nonaqueous electrolyte secondary battery, comprising:

   a charge control step of pulse charging by supplying a pulsed current periodically to the nonaqueous electrolyte secondary battery;
   a battery voltage detection step of measuring a battery voltage of the nonaqueous electrolyte secondary battery;
   a comparison step of comparing a battery voltage, measured in the battery voltage detection step when the pulsed current is supplied, with a predetermined set voltage; and
   a charge end control step of ending the pulse charging when the comparison result shows that the measured battery voltage is equal to or higher than the set voltage.

2. The pulse charge method for a nonaqueous electrolyte secondary battery according to claim 1, further comprising:

   a battery temperature detection step of detecting a temperature of the nonaqueous electrolyte secondary battery, and
   a set voltage setting step of setting the set voltage on the basis of the temperature detected in the battery temperature detection step.

3. The pulse charge method for a nonaqueous electrolyte secondary battery according to claim 2, wherein in the set voltage setting step, the set voltage is set such that the set voltage decreases as the temperature detected in the battery temperature detection step increases.

4. The pulse charge method for a nonaqueous electrolyte secondary battery according to claim 1, wherein the set voltage is equal to or higher than 4.2 V.

5. The pulse charge method for a nonaqueous electrolyte secondary battery according to any one of claims 1 to 4, further comprising:

   an average value calculation step of calculating an average value of the battery voltage with respect to one period in the periodically palsed current; and
   a duty ratio setting step of reducing an on-duty ratio of a pulse in the pulse charging only by a preset value each time the average value exceeds a predetermined charge control voltage, wherein
   in the charge end control step, the pulse charge is ended when the duty ratio that has been set in the duty ratio setting step becomes less than a stipulated value that has been set in advance.

6. The pulse charge method for a nonaqueous electrolyte secondary battery according to claim 5, wherein

in the duty ratio setting step, an on-duty ratio of a pulse in the pulse charging is increased only by a preset value when the average value is less than the charge control voltage.

7. The pulse charge method for a nonaqueous electrolyte secondary battery according to claim 5 or 6, wherein the charge control voltage is obtained by the following Equation (1):

$$V_c = Voc + r \times \alpha \qquad \ldots(1)$$

where $V_c$ stands for the charge control voltage, Voc stands for an open-circuit voltage when the nonaqueous electrolyte secondary battery is fully charged, r stands for an internal resistance value in a normal state of the nonaqueous electrolyte secondary battery, and $\alpha$ stands for an average value of a charge current in one period of a charge pulse when pulse charging is ended.

8. A pulse charge control device, comprising:

a charge control unit that pulse charges by supplying a pulsed current periodically to a nonaqueous electrolyte secondary battery;
a battery voltage detection unit that measures a battery voltage of the nonaqueous electrolyte secondary battery;
a voltage comparison unit that compares a battery voltage, measured by the battery voltage detection unit when the pulsed current is supplied, with a predetermined set voltage, and
a charge end control unit that ends the pulse charging performed by the charge control unit when a result of comparison conducted by the voltage comparison unit shows that the measured battery voltage is equal to or higher than the set voltage.

9. The pulse charge control device according to claim 8, further comprising:

a battery temperature detection unit that detects a temperature of the nonaqueous electrolyte secondary battery; and
a set voltage setting unit that sets the set voltage on the basis of the temperature detected by the battery temperature detection unit.

10. The pulse charge control device according to claim 9, wherein
the set voltage setting unit sets the set voltage such that the set voltage decreases as the temperature detected by the battery temperature detection unit increases.

11. The pulse charge control device according to claim 8, wherein the set voltage is equal to or higher than 4.2 V.

12. The pulse charge control device according to any one of claims 8 to 11, further comprising:

an average value calculation unit that calculates an average value of the battery voltage measured by the battery voltage detection unit with respect to one period in the periodically palsed current; and
a duty ratio setting unit that reduces an on-duty ratio of a pulse in the pulse charging only by a preset value each time the average value exceeds a predetermined charge control voltage, wherein
the charge end control unit further ends the pulse charge performed by the charge control unit when the duty ratio that has been set by the duty ratio setting unit becomes less than a stipulated value that has been set in advance.

13. The pulse charge control device according to claim 12, wherein the duty ratio setting unit increases an on-duty ratio of a pulse in the pulse charging only by a preset value when the average value is less than the charge control voltage.

14. The pulse charge control device according to claim 12 or 13, wherein
the charge control voltage is obtained by the following Equation (1):

$$V_c = Voc + r \times \alpha \qquad \ldots(1)$$

where $V_c$ stands for the charge control voltage, Voc stands for an open-circuit voltage when the nonaqueous electrolyte secondary battery is fully charged, r stands for an internal resistance value in a normal state of the nonaqueous electrolyte secondary battery, and $\alpha$ stands for an average value of a charge current in one period of a charge pulse when pulse charging is ended.

# FIG. 1

EP 2 197 085 A1

# FIG. 2

FIG. 3

```
                    ┌─────────────────┐
                    │  CHARGE START   │~S101
                    └────────┬────────┘
                             ▼
                    ┌─────────────────┐
                    │  DUTY D = 100%  │~S102
                    └────────┬────────┘
                             ▼
                 ┌──────────────────────┐
                 │  PERIOD TIMER: T     │~S103
                 │  DUTY TIMER: T × D/100│
                 └──────────┬───────────┘
                            ▼
           ┌────────────────────────────────┐
           │ CHARGE SWITCH IS SWITCHED ON    │~S104
           └───────────────┬────────────────┘
                           ▼
                 ┌──────────────────┐
                 │  VB IS MEASURED  │~S115
                 └────────┬─────────┘
                          ▼
                      S116
                  ╱VB < V1 ?╲────NO────────────┐
                   ╲       ╱                    │
                     YES                        │
                      ▼                         │
                     S117                       │
          NO     ╱ IS COUNT  ╲                  │
        ◄────────╱OF DUTY TIMER TOO╲            │
                 ╲   HIGH?  ╱                   │
                     YES                        │
                      ▼                         │
                     S118                       │
                 ╱ IS COUNT  ╲   YES            │
                 ╱OF PERIOD TIMER TOO╲──────┐   │
                 ╲   HIGH?  ╱              │   │
                     NO    S119            │   │
                      ▼                    │   │
         ┌──────────────────────────┐     │   │      S126
         │CHARGE SWITCH IS SWITCHED OFF│   │   │  ┌──────────────┐
         └────────────┬─────────────┘     │   └─►│ CHARGE SWITCH │
                      ▼                    │      │ IS SWITCHED OFF│
                     S120                  │      └──────┬───────┘
          NO   ╱ IS COUNT  ╲               │             │
        ◄──────╱OF PERIOD TIMER TOO╲       │             │
               ╲   HIGH?  ╱                │             │
                   YES  ◄──────────────────┘             │
                    ▼                                    │
                  S121                                   │
              ╱VAVE ≧ VC ?╲────NO────┐                   │
               ╲        ╱            ▼                   │
                 YES   S122         S123                 │
                  ▼            ╱ D=100% ╲──YES──┐         │
         ┌──────────────┐     ╲        ╱        │        │
         │  D←D−1(%)    │         NO   S124      │        │
         └──────┬───────┘          ▼             │        │
                │          ┌──────────────┐      │        │
                │          │  D←D+1(%)    │      │        │
                │          └──────┬───────┘      │        │
                ▼◄────────────────┴─────────────┘        │
              S125                                        │
          ╱ D < 10% ?╲────YES───────────────────────────►│
           ╲        ╱                                     ▼
              NO                                  ┌──────────────┐
               │                                  │  CHARGE END  │
               └──────────────────────────────────┘
```

FIG. 4

FIG. 5

CHARGE START — S201

DUTY D = 100% — S202

PERIOD TIMER: T    DUTY TIMER: T × D/100 — S203

CHARGE SWITCH IS SWITCHED ON — S204

BATTERY TEMPERATURE IS MEASURED — S213

V1 IS SET BASED ON MEASURED BATTERY TEMPERATURE — S214

VB IS MEASURED — S215

S216
VB < V1 ?    NO / YES

S217
IS COUNT OF DUTY TIMER TOO HIGH?    NO / YES

S218
IS COUNT OF PERIOD TIMER TOO HIGH?    YES / NO

S219
CHARGE SWITCH IS SWITCHED OFF

S220
IS COUNT OF PERIOD TIMER TOO HIGH?    NO / YES

S221
$V_{AVE} \geqq V_C$ ?    NO / YES

S222
D ← D − 1 (%)

S223
D = 100%    YES / NO

S224
D ← D + 1 (%)

S225
D < 10% ?    YES / NO

S226
CHARGE SWITCH IS SWITCHED OFF

CHARGE END

## INTERNATIONAL SEARCH REPORT

| International application No. |
| --- |
| PCT/JP2008/002787 |

A. CLASSIFICATION OF SUBJECT MATTER
*H02J7/04*(2006.01)i, *H01M10/44*(2006.01)i

According to International Patent Classification (IPC) or to both national classification and IPC

B. FIELDS SEARCHED

Minimum documentation searched (classification system followed by classification symbols)
H02J7/04, H01M10/44

Documentation searched other than minimum documentation to the extent that such documents are included in the fields searched

| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2004-064915 A (Ricoh Co., Ltd.), | 1,8 |
| Y | 26 February, 2004 (26.02.04), | 2-7,9-14 |
| | Par. Nos. [0042], [0043]; Figs. 2, 3 | |
| | & US 2004/0195996 A1    & CN 1476142 A | |
| Y | JP 9-007641 A (Sanyo Electric Co., Ltd.), | 2,3,9,10 |
| | 10 January, 1997 (10.01.97), | |
| | Par. Nos. [0024], [0025] | |
| | & US 5747969 A | |
| Y | JP 2005-312239 A (Sony Corp.), | 4,7,11,14 |
| | 04 November, 2005 (04.11.05), | |
| | Par. Nos. [0005] to [0007] | |
| | & US 2005/0237024 A1    & KR 10-2006-0047189 A | |
| | & CN 1691461 A | |

| ☒ Further documents are listed in the continuation of Box C. | ☐ See patent family annex. |
| --- | --- |

```
*    Special categories of cited documents:
"A"  document defining the general state of the art which is not considered    to
     be of particular relevance
"E"  earlier application or patent but published on or after the international filing
     date
"L"  document which may throw doubts on priority claim(s) or which is
     cited to establish the publication date of another citation or other
     special reason (as specified)
"O"  document referring to an oral disclosure, use, exhibition or other means
"P"  document published prior to the international filing date but later than the
     priority date claimed
```

```
"T"  later document published after the international filing date or priority
     date and not in conflict with the application but cited to understand
     the principle or theory underlying the invention
"X"  document of particular relevance; the claimed invention cannot be
     considered novel or cannot be considered to involve an inventive
     step when the document is taken alone
"Y"  document of particular relevance; the claimed invention cannot be
     considered to involve an inventive step when the document is
     combined with one or more other such documents, such combination
     being obvious to a person skilled in the art
"&"  document member of the same patent family
```

| Date of the actual completion of the international search | Date of mailing of the international search report |
| --- | --- |
| 12 December, 2008 (12.12.08) | 22 December, 2008 (22.12.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/002787 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 11-191934 A  (NEC Corp.),<br>13 July, 1999 (13.07.99),<br>Par. Nos. [0006], [0007], [0017] to [0019];<br>Fig. 2<br>& US 6020720 A            & GB 2330460 A<br>& AU 737309 B | 5-7,12-14 |
| A | JP 2004-319365 A  (Nippon Telegraph And Telephone Corp.),<br>11 November, 2004 (11.11.04),<br>Fig. 1<br>(Family: none) | 1-14 |

Form PCT/ISA/210 (continuation of second sheet) (April 2007)

**EP 2 197 085 A1**

### Patent documents cited in the description

- JP H4123771 B

- JP H8241735 B